# EUROPEAN PATENT APPLICATION

(11) **EP 1 898 116 A1**
(43) Date of publication of application: **12.03.2008**
(21) Application number: 07253183.3
(22) Date of filing: 14.08.2007
(51) Int. Cl.: F16D 65/853, F16D 55/228

(54) **A disc brake caliper and a method of manufacturing a disc brake caliper**

(30) Priority: 06.09.2006 GB 0617474
(71) Applicant: AP Racing Limited, Wheler Road Coventry CV3 4LB (GB)
(72) Inventor: Tait, Jonathan Paul, Warwick CV34 5LE (GB)
(74) Representative: Wilson Gunn

(57) **Abstract**

A fixed type disc brake caliper has a body machined from at least one solid piece of material. The body comprises a pair of limbs (12,14) interconnected by spaced bridging members (16,18), each limb housing one or more hydraulic cylinders (26,28,30). The caliper has a cooling fluid passage for circulating cooling fluid through both limbs. In each of the limbs, the passage extends through both an upper peripheral wall region (42) between the one or more cylinders and an upper face and a lower peripheral wall region (44) between the cylinders and a lower face (40), so that the cooling fluid passage at least partially surrounds opposing side wall regions of the, or each, cylinder in the limb. Advantageously, the passage is formed by milling a channel (46) of varying depth around the pistons from an outer side face (48) of each limb. A cover plate is welded to the outer side face of each limb to close the open side of the channel.

## Description

This invention relates to a disc brake caliper for motor vehicles and in particular but not exclusively to a disc brake caliper for high performance cars.

In a typical disc brake, a brake caliper straddles the outer peripheral margin of a brake disc, the caliper having at least one hydraulic cylinder therein for applying friction pads to each side of the disc. The calipers are of two basic types, moving calipers and fixed calipers. In a moving type caliper, one or more hydraulic cylinders are located on one side of the disc for direct application of friction pad(s) on that side of the disc, the friction pad(s) on the other side of the disc being applied by the reaction movement of the caliper. In contrast, a fixed caliper typically has a pair of limbs which locate one on either side the disc, each limb having one or more hydraulic cylinders for direct application of the friction pads to the disc. The limbs are interconnected at either end by a bridging member which spans the radial edge of the disc.

With disc brakes of either type fitted to motor vehicles, the friction pads engage opposed sectors of the disc over arcs of varying circumferential extent depending upon the braking requirements. When the brakes are applied, the pads grip onto the disc and friction heat is generated so that the brake disc can become red hot. In extreme applications, such as in racing cars, the calipers themselves may become overheated which can cause boiling of the hydraulic brake fluid.

To reduce the problems associated with overheating, it is known for calipers to be formed with a cooling passage which partially surrounds the, or each, hydraulic cylinder and to circulate a cooling fluid, such as water, through the passage. For example, WO 94/21937 A (Automotive Products PLC) discloses a fixed caliper with a cooling fluid passage which extends around the side walls of the hydraulic cylinders in both limbs. As described, the caliper comprises a two-piece body, in which each of the two pieces is cast separately and then machine finished prior to assembly.

In certain applications, it is preferable to use a fixed caliper in which the body is machined from one or more solid pieces of metal or billets rather than cast. The metal pieces may be rolled or they may be a forging of a suitable aluminium or aluminium alloy for example. In some cases the body is machined in two pieces, each piece comprising one of the limbs and part of the bridging members. After machining, the pieces are assembled together to using bolts or other fastenings to form the caliper body. In other cases, the whole of the caliper body is machined from a single piece of metal so that the limbs and bridging members are formed integrally. This arrangement is often referred to as a mono-block construction. Whilst caliper bodies are typically manufactured from metal other materials, such as a carbon composite material, could also be used. A caliper body which is formed by machining one or more solid pieces of material rather than by casting and machine finishing will be referred to herein as a "machined from solid body".

It has proved difficult to produce a cooling passage in a fixed type disc brake caliper having a machined from solid body, particularly where the caliper body is of mono-block construction, owing to the complexity of the machining processes involved.

US 6,722,476B (Freni Brembo S.p.A) discloses one attempt to produce a cooling fluid passage in fixed type caliper having a machined from solid mono-block body. In the arrangement described, wells are formed in a lower surface of each of the caliper's limbs, the wells being of a depth such that they extend to a wall proximate to and delimitating at least one of the hydraulic cylinders. Each well is closed by a cover which is fastened to the caliper body by screws and the wells in each limb are interconnected by ducts to form a flow path. It is a drawback of this arrangement that the cooling passage extends around the lower surfaces of the hydraulic cylinders only. As a result, the cooling effect is more limited and localised than with the prior known cast, two-piece caliper in which the cooling passageway substantially surrounds the hydraulic cylinders.

It is an objective of the invention to provide a fixed type disc brake caliper having a machined from solid body that has an improved cooling fluid flow passage arrangement.

It is a further objective of the invention to provide a fixed type disc brake caliper having a machined from solid body that has a cooling fluid flow passage that substantially surrounds the hydraulic cylinders in each limb.

It is a still further objective to provide a method of manufacturing a fixed type disc brake caliper having a machined from solid body which has an improved cooling passage.

In accordance with a first aspect of the invention, there is provided a fixed type disc brake caliper having a machined from solid body, the body comprising a pair of limbs interconnected by spaced bridging members, wherein each limb houses one or more hydraulic cylinders and in which the body is machined from one or more solid pieces of metal, the caliper having a cooling fluid passage for circulating cooling fluid through both limbs, characterised in that, in each limb, the passage extends at least partially through both an upper peripheral wall region of the limb between the one or more cylinders and an upper face of the limb and a lower peripheral wall region of the limb between the one or more cylinders and a lower face of the limb, so that the cooling fluid passage at least partially surrounds opposing side wall regions of the, or each, cylinder in the limb.

Preferably, the cooling fluid passage substantially encircles the one or more cylinders in each limb.

The cooling fluid passage may comprise a channel in an outer side face of each limb, the caliper further comprising a cover mounted to the outer side face of each limb to close an open side face of the channel. The depth of the channel in each limb may vary along its length, the channel comprising regions of greater depth separated by regions of lesser depth. At least some of the regions of greater depth may extend into a peripheral wall region of the respective limb so as to overlap a side wall region of at least one cylinder. At least one region of greater depth of the channel may overlap side wall regions of two adjacent cylinders in the respective limb.

The channel in each limb may have a first end and a second end, the first end of the channel in one limb being fluidly connected to the first end of the channel in the other limb by means of a bore which extends through one of the bridging members. The second end of the channel in each limb may be connected with a respective port by means of a further bore, the ports comprising an inlet and an outlet respectively for the cooling fluid passage.

Where the fluid passage is comprises a channel, the open side of the channel in each limb may be closed off by a cover plate which may be welded to the outer side face of the respective limb. Preferably, each plate is electron beam welded to the outer side face of the limb. An outer side face of each limb may be recessed to accommodate a respective cover plate. In which case, the channel in each limb may extend from a base of the recess, transversely of the caliper into the limb.

The body may be formed from two parts, each machined from a single piece of material and which are assembled to form the body or the body may be of mono-block construction and machined from a single solid piece of material.

In accordance with a second aspect of the invention, there is provided a method of manufacturing a fixed type disc brake caliper having a machined from solid body, the body comprising a pair of limbs interconnected by spaced bridging members, wherein each limb houses one or more hydraulic cylinders, the method comprising forming a cooling fluid passage for circulating cooling water through both limbs, characterised in that, in each limb, the passage is formed so as to extend at least partially through both an upper peripheral wall region of the limb between the one or more cylinders and an upper face of the limb and a lower peripheral wall region of the limb between the one or more cylinders and a lower face of the limb, such that the passage at least partially surrounds opposing side wall regions of the, or each, of the cylinders in the limb.

Preferably, the cooling fluid passage is formed so as to substantially encircle an area of each limb which contains the one or more cylinders.

The step of forming the cooling fluid passage may comprise forming a channel in an outer side face of each of the limbs and mounting a cover to the outer side face of each limb to close off an open side of the channel. The depth of the channel in each limb may be varied along its length to form regions of greater depth separated by regions of lesser depth. The regions of greater depth may be extended into a peripheral wall region of the respective limb so as to overlap a side wall region of at least one cylinder. At least one region of greater depth of the channel in each limb may be formed so as to overlap a side wall region of two adjacent cylinders.

The step of forming the channels may be carried out using an end mill.

The channel in each limb may be formed so as to have a first end and a second end and the method may further comprise forming a bore in one of the bridging members to fluidly interconnect the first end of the channel in one of the limbs with the first end of the channel in the other of the limbs. The method may further comprise forming a first port and a second port and forming a first further bore to connect the second end of the channel in one of the limbs with the first port and forming a second further bore to connect the second end of the channel in the other of the limbs to the second port.

The step of mounting a cover to the outer side face of each limb may include welding a cover plate to the outer side face of each limb. Preferably, the method comprises electron beam welding each cover plate to the outer side face of its respective limb.

The method may further comprise forming a recess in the outer side face of each limb to receive a respective cover plate. In which case, the step of forming the channels may comprise forming each channel in the base of the recess in the respective limb so that the channel extends transversely of the caliper into the limb.

The method may comprise machining the body in two-parts from two solid pieces of material. Alternatively, the method may comprise machining the body in a single integral part from a single solid piece of material.

An embodiment of a disc brake caliper in accordance with the invention will now be described, by way of example only, with reference to the accompanying drawings in which:

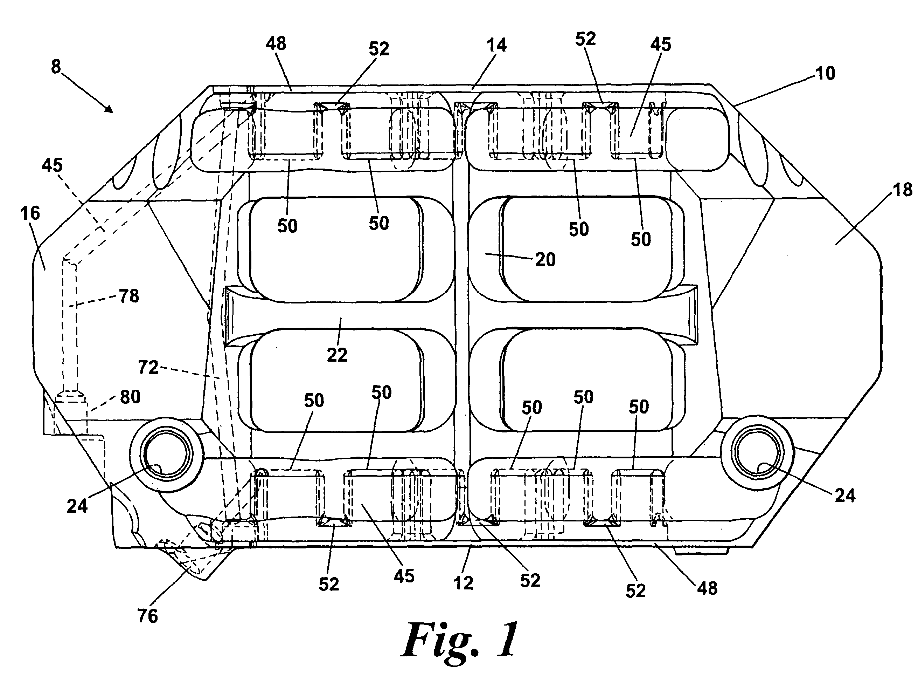

Figure 1 is a plan view from above of a body for a disc brake caliper in accordance with the invention;
Figure 2 is a perspective view of the caliper body of Figure 1 taken from below and to one side;
Figure 3 is a side elevation of the caliper body of Figure 1;
Figure 4 is a cross sectional view of the caliper body of Figure 1 taken on line A-A of Figure 3;
Figure 5 is a cross sectional view of the caliper body of Figure 1 taken on line B-B of Figure 3; and

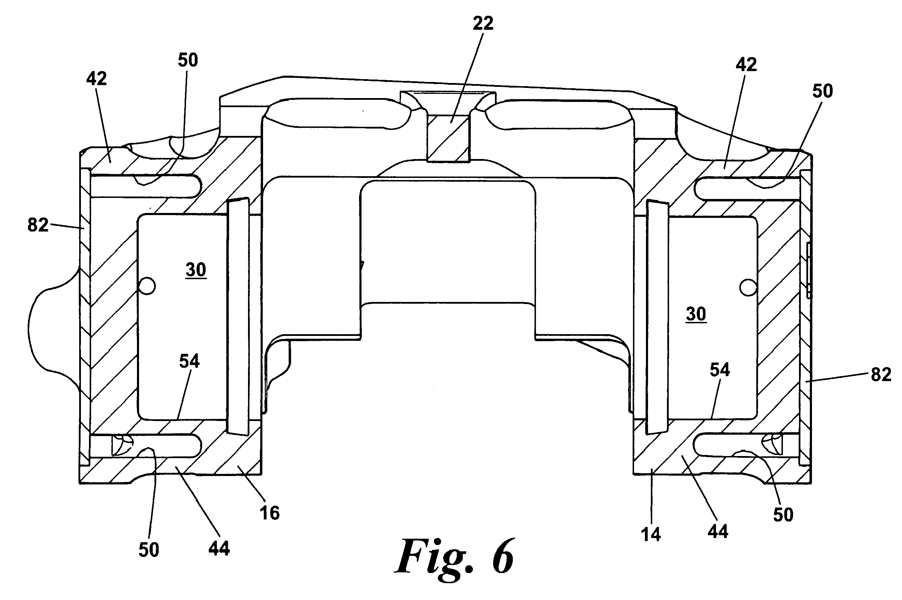

Figure 6 is a view similar to that of Figure 5 but showing the body with blanking plates fitted.

A disc brake caliper 8 has a caliper body 10 machined integrally from a single piece of material and includes a pair of limbs 12, 14 interconnected at either end by two spaced bridging members 16, 18. To provide for additional structural rigidity, the two limbs are further interconnected by a central support member 20 which extends laterally between the two limbs. A further support member 22 extends between the two bridging members 16, 18 longitudinally of the caliper body and merges with the central support member 20 where the two intersect. They body will typically be made from a solid billet of metal such as aluminium or aluminium alloy but could be made from any suitable material. Where the additional structural rigidity is not essential, one or both of the support members 20, 22 can be omitted.

In use, the caliper 8 straddles a brake disc (not shown) with a limb 12, 14 located on each side of the disc. A first limb 12 is connected in use to a torque reaction member e.g. a stub axle (not shown) by means of bolts or other fasteners (not shown) which engage in mounting holes 24.

The two limbs 12, 14 each have three hydraulic cylinders 26, 28, 30 spaced across the caliper body so that the cylinders 26, 28, 30 in the first limb 12 oppose the cylinders 26, 28, 30 in the second limb 14. The cylinders are arranged so that when the caliper is in use, the cylinders are spaced circumferentially with respect to the disc. In use, each of the cylinders 26, 28, 30 houses a piston (not shown) which thrust friction pads (also not shown) against the opposing friction surfaces of the discs when the disc brake is actuated. The pads (not shown) may comprise a single arcuate pad on each side of the disc or may comprise a plurality of pads on each side of the disc so that there is provided a respective pad associated with each piston/cylinder assembly. Braking loads from the pads are transmitted to the caliper body 10 and via the fastenings to the torque reaction member.

The cylinders 26, 28, 30 are fluidly linked by means of fluid passages 31 in the caliper body to form a hydraulic brake fluid circuit in a known manner. Hydraulic brake actuating fluid is supplied to an inlet 32 of the hydraulic fluid circuit so that when the vehicle brakes are operated, hydraulic pressure in the piston and cylinder assemblies causes the brake pads to frictionally engage the brake disc. The hydraulic fluid circuit in the caliper also includes an outlet connection for a bleed nipple (not shown) to enable air to be bled from the hydraulic brake fluid circuit if required.

The cylinders 26, 28, 30 are machined into the limbs 12, 14 from their inner side faces 34, that is to say the side faces of the limbs which are directed towards the friction surfaces of the brake disc when the caliper is in use. To reduce the weight of the caliper body 10, grooves or recesses 36 are machined in the upper 38 and lower 40 faces of the limbs 12, 14. The area between the cylinders 26, 28, 30 and the upper face 38 can be considered an upper peripheral wall region 42 of the limb, whilst the area between the cylinders 26, 28, 30 and the lower face 40 can be considered an lower peripheral wall region 44.

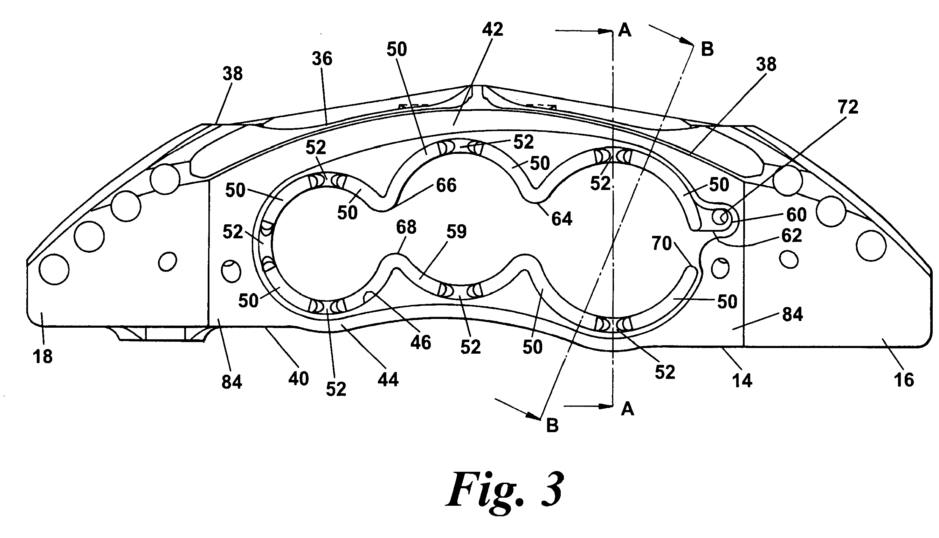

The terms "upper" and "lower" are used herein (including in the claims) in relation to a caliper in the orientation of the caliper 8 as shown in Figure 3. However, it will be appreciated that a caliper in accordance with the invention may be used in other orientations and the terms should be construed according. For example, a caliper in accordance with the invention may be fitted to a brake disc in a generally vertical orientation. In use, the upper faces 38 of the limbs will be directed generally away from the axis of rotation of the disc and so may also be referred to as being outer radial faces in the sense that they face outwardly in relation to the radius of the disc. Similarly, the upper peripheral wall regions 42 may be referred to as radially outer peripheral wall regions. Whereas, the lower faces 40 of the limbs will be directed generally toward the axis of rotation of the disc and so can be considered as inner radial faces in the sense that they face generally inwardly in relation to the radius of the disc. By a similar analogy, the lower peripheral wall regions 44 may also be referred to as radially inner peripheral wall regions.

The caliper 8 has a cooling fluid passageway, indicated generally at 45, through which cooling fluid, typically water, can be circulated to cool the caliper and the hydraulic brake fluid during use. To form part of the cooling fluid passageway 45, a groove or channel 46 is formed in the outer side face 48 of each of the limbs. The outer side face 48 being the face of each limb which is directed away from the respective friction surface of the disc in use.

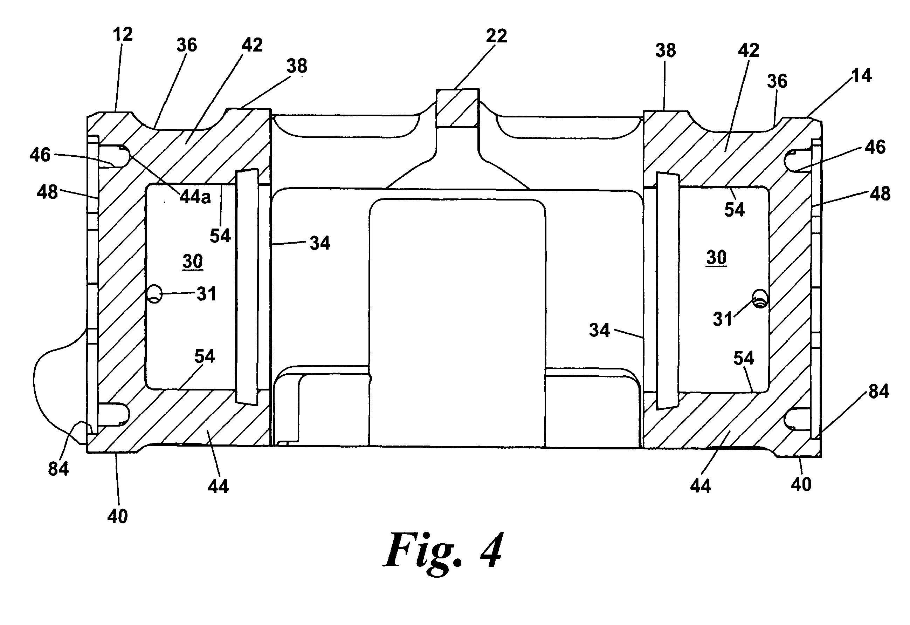

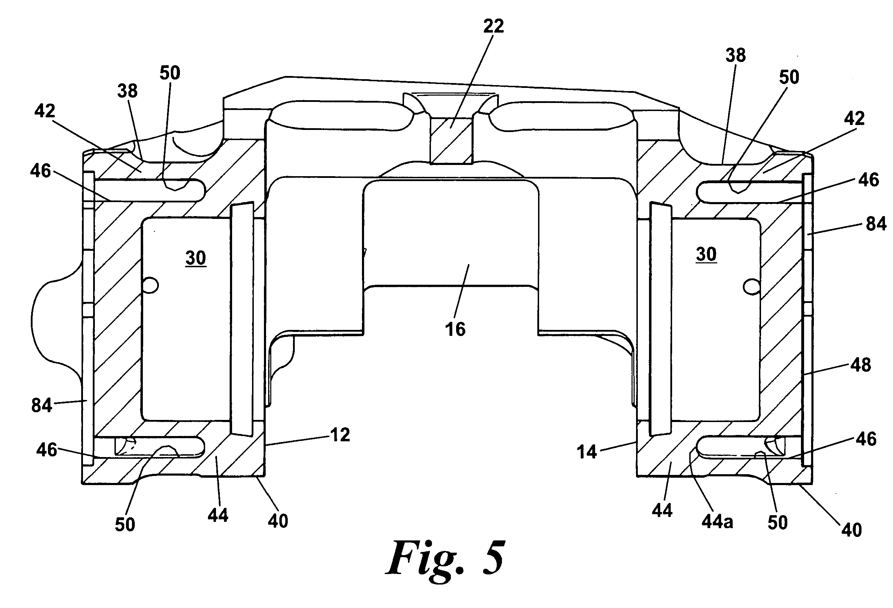

As can be seen best in Figure 3, each channel 46 substantially encircles the region of the limb 12, 14 in which the cylinders 26, 28, 30 are formed though the ends of the channel do not meet. The depth of each channel 46 varies along its length so that it has regions of greater depth 50 separated by regions of lesser depth 52. As shown in Figure 5, the regions of greater depth 50 extend transversely into the limb so as to overlie the side wall region 54 of at least one of the cylinders. Whereas, the regions of lesser depth 52 do not extend transversely into the limb far enough to overlie the side wall regions of the cylinders, as is shown in Figure 4. The regions of increased depth 50 create recesses or cooling pockets which surround significant areas of the side walls 54 of the cylinders through which the cooling water can flow. The relatively shallow regions are of a sufficient depth to enable the cooling fluid to pass from one pocket 50 to the next to create a flow path when the open outer sides of the channels 46 are closed off, as will be described in more detail later. At least one cooling pocket 50 is formed adjacent each cylinder in the upper peripheral wall region 42 and at least one cooling pocket 50 is formed adjacent each cylinder in the lower peripheral wall region 44. Thus each cylinder 26, 28, 30 in each limb is at least partially surrounded on opposite circumferential sides by one or more cooling pockets 50. This provides for an even and more efficient cooling of the hydraulic fluid in the cylinders in use. In the present embodiment, at least two cooling pockets 50 are provided about the side wall of each of the cylinders in diametrically opposed positions.

Each channel 46 has a first end 60 which lies spaced from a first outer one of the cylinders 30 towards the adjacent bridging member 16. The channel 46 has a straight portion 62 which extends from the first end 60 towards the periphery of the cylinder 30 just to one side of a mid line of the cylinder as viewed in Figure 3. The channel then follows the circumference of the first cylinder 30 over the apex of the cylinder, as shown in Figure 3, where it is closest to the upper face 38 of the limb and part way down the other side of the cylinder 30. The channel then forms a cusp 64 and follows the contour of the middle cylinder 28 in a similar fashion. The channel 46 forms a further cusp 66 between the middle cylinder 28 and a second of the outer cylinders 26 and follows the circumference of the second outer cylinder 26 right around until it forms a further cusp 68 between the second outer cylinder 26 and the middle cylinder 28 in the lower peripheral wall region 44. The channel 46 then continues this fashion following the circumferences of the middle and first outer cylinders 28, 30 until it reaches a second end 70 which is spaced from the first end. The shallow regions 52 of the channel may be positioned where the side walls 54 of the cylinders are closest to the upper 38 and lower 40 faces of the limbs and so where the upper and lower peripheral wall regions 42, 44 are at their thinnest. As the channels 46 do not penetrate into the peripheral wall regions 42, 44 at these points, the structural integrity of the body is not compromised. Cooling pockets 50 are formed in the cusped regions of the channel between the middle 28 and outer cylinders 26, 30 and about outer circumferential regions of the outer cylinders 26, 30.

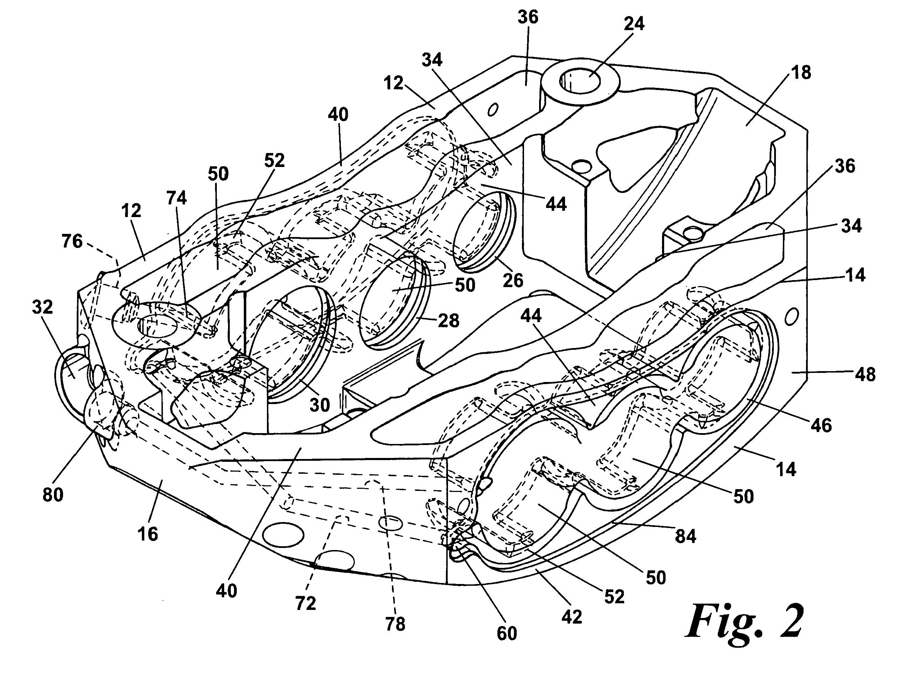

As can be seen best in Figure 2, the first end 60 of the channel 46 in the first limb 12 is connected to the corresponding first end 60 of the channel 46 in the other limb 14 by means of a bore 72 which extends through one of the bridging members 16. The second end 70 of the channel 46 in the first limb 12 is connected via a further bore 74 to a port 76 which serves as an inlet to the cooling fluid passage. The second end 70 of the channel 46 in the second limb 14 is connected by means of a yet further bore 78 to a further port 80 which serves as an outlet for the cooling fluid passage. Thus the channels 46 and bores 72, 74, 78 form a fluid circuit through which the cooling fluid may be circulated from the inlet port 76 to the outlet port 80. Means to enable the inlet and outlet ports 76, 80 to be connected with cooling fluid supply and return lines respectively may be provided. For ease of connection, both the inlet 76 and outlet 80 ports are positioned on the same side of the caliper adjacent the first limb 12. Thus the bore 78 which connects the second end 70 of the channel 46 in the second limb 14 to the outlet port 80 also extends through the bridging member 16. It will be appreciated that the cooling fluid could flow through the passageway 45 in the opposite direction in which case the port 80 becomes the inlet port and the port 76 becomes the outlet port.

After machining, the open outer sides of the channels or grooves 46 are closed by cover means such as blanking plates 82 that are fixed to the outer side faces 48 of the limbs. To accommodate the plates 82, the outer side faces 48 of the limbs are recessed as at 84. Preferably, the plates 82 are made of the same material as the caliper body and are welded in position to provide a fluid tight seal. The plates may be electron beam welded to the body, particularly where the body 10 and plates 82 are both made of aluminium or aluminium alloy. The plates 82 may be welded about their peripheries outside of the channels 46 but may also be welded to the outer side faces 48 in a central region within the channels 46. The recesses 84 preferably have a depth that is equal to the thickness of the cover plates 82 so that the sides of the caliper present a neat appearance after assembly.

Whilst welding the plates 82 is a preferred and advantageous arrangement, but alternative means of fixing the plates or other cover means to the body can be used such as bonding or by use of fastenings such as bolts or screws. A seal means may also be provided between the plates 82 and the body 10 of the caliper. Preferably, the plates 82 and any seal means provided should ensure that the cooling fluid is constrained to flow through the channels 46 without leaking across between the plates 82 and the bases of the recesses 84.

In use, cooling fluid is circulated through the cooling passage 45 by means of a pump which is connected to the inlet and outlet ports 76, 80 through feed and return pipes. The circulation of cooling fluid helps to cool the caliper and reduce the risk of the hydraulic fluid boiling. Whilst water is the preferred cooling fluid, other fluids may also be used such as antifreeze or a mixture of water and anti-freeze or any other suitable fluid.

The channels 46, the bores 72, 74, 78, the inlet and outlet ports 76, 80 and the recesses 84 for the blanking plates 82 can all be produced as part of the machining operations to produce the integral caliper body 10. Thus the recesses 84 can be milled into the side faces 48 of the limbs 12, 14 followed by the channels 46, which will typically be formed using an end mill. Preferably, the end mill has a radiused end so that the inner side face 44a of the channel is also radiused as shown in Figures 4 and 5. The bores 72, 74, 78 can then be formed using a drilling operation and the ports 76, 78 machined as required. The order in which the various machining process are carried out can be varied as appropriate. After machining of the caliper body, the blanking plates 82 are welded or otherwise fixed in position. The cooling fluid passage 45 can then be tested for integrity before the caliper is fully assembled.

When designing and manufacturing the caliper, the size of the cooling pockets 50 is determined in order to achieve the desired level of cooling. Thus, larger pockets 50 will tend to result in greater cooling of the caliper for a given flow rate of the coolant fluid. In contrast, reducing the size of the pockets will tend to decrease the cooling effect. Where maximum cooling is required, each groove or channel 46 may be produced with a constant depth so that the whole channel 46 forms a continuous cooling pocket overlying the side walls of the cylinders. However, care must be taken to ensure the structural rigidity of the body 10.

Whilst a continuous groove or channel 46 of varying depth is the preferred method of creating a series of linked cooling pockets 50 other methods of machining a cooling fluid passage from the outer side face 48 of each limb 12, 14 can be used. For example, the cooling pockets 50 in each limb could each be machined separately and fluidly interconnected by means of bores drilled or otherwise formed between them. Furthermore, whilst milling is the preferred method of forming the channels 46, other methods could also be used. For example, the channels 46 or pockets 50 could be formed using spark erosion or any other suitable method.

Whilst in the preferred embodiment, the caliper body 10 is machined from a single piece of metal as a mono-block unit; the invention can be equally applied to disc brake callipers having a two-piece machined caliper body. In a two-piece body, the channels 46 in either limb may be fluidly interconnected by means of external pipes. Alternatively, the channels 46 may be fluidly interconnected by means of passageways through the bridging members, provided seal means are used at the interface of the two pieces to ensure that the no leakage takes place. It will also be appreciated that the term body applies to the main structural component of the caliper and does not include the cover plates 82 or other parts which may be affixed to the body during assembly of the caliper. Thus when referring to a caliper with a mono-block body 10 the main part of the body is machined from a single piece of metal to which the plates 82 are affixed along with any other required parts such as fluid connectors, pipes, pistons and seals.

It can be seen that a machined from solid caliper 8 constructed and manufactured in accordance with the invention has a cooling fluid passage that extends around large areas of the side walls of the cylinders to provide improved cooling. It is a particular advantage that the cooling fluid passage can be arranged to provide cooling pockets that are positioned generally symmetrically about each cylinder to ensure an even cooling. Thus the cooling fluid passage 45 extends over at least two regions of the side walls of each cylinder 26, 28, 30 that are diametrically opposed.

Whereas the invention has been described in relation to what is presently considered to be the most practical and preferred embodiment, it is to be understood that the invention is not limited to the disclosed arrangements but rather is intended to cover various modifications and equivalent constructions included within the spirit and scope of the invention.

Where the terms "comprise", "comprises", "comprised" or "comprising" are used in this specification, they are to be interpreted as specifying the presence of the stated features, integers, steps or components referred to, but not to preclude the presence or addition of one or more other feature, integer, step, component or group thereof.

## Claims

1. A fixed type disc brake caliper (8) having a machined from solid body (10), the body comprising a pair of limbs (12, 14) interconnected by spaced bridging members (16, 18), wherein each limb houses one or more hydraulic cylinders (26, 28, 30), the caliper further having a cooling fluid passage (45) for circulating cooling fluid through both limbs, **characterised in that**, in each limb, the passage extends at least partially through both an upper peripheral wall region (42) of the limb between the one or more cylinders and an upper face (38) of the limb and a lower peripheral wall region (44) of the limb between the one or more cylinders and a lower face (40) of the limb, so that the cooling fluid passage at least partially surrounds opposing side wall regions (54) of the, or each, cylinder in the limb.

2. A fixed type disc brake caliper as claimed in claim 1, in which the cooling fluid passage (45) substantially encircles the one or more cylinders (26, 28, 30) in each limb.

3. A fixed type disc brake caliper as claimed in claim 1 or claim 2, in which the cooling fluid passage (45) comprises a channel (46) in an outer side face (48) of each limb, the caliper further comprising a cover (82) mounted to the outer side face of each limb to close an open side face of the channel.

4. A fixed type disc brake caliper as claimed in claim 3, in which the depth of the channel (46) in each limb varies along its length, the channel comprising regions of greater depth (50) separated by regions of lesser depth (52).

5. A fixed type disc brake caliper as claimed in claim 4, in which at least some of the regions of greater depth (50) extend into a peripheral wall region (42, 44) of the respective limb so as to overlap a side wall (54) region of at least one cylinder.

6. A fixed type disc brake caliper as claimed in claim 5, in which at least one region of greater depth (50) of the channel overlaps side wall regions (54) of two adjacent cylinders (26, 28, 30) in the respective limb.

7. A fixed type disc brake caliper as claimed in any one of the previous claims, in which the channel (46) in each limb has a first end (60) and a second end (70), the first end (70) of the channel in one limb (12, 14) being fluidly connected to the first end (70) of the channel in the other limb (12, 14) by means of a bore (72) which extends through one of the bridging members (16).

8. A fixed type disc brake caliper as claimed in claim 7, in which the second end (70) of the channel in each limb (12, 14) is connected with a respective port (76, 80) by means of a further bore (74, 78), the ports (76, 80) comprising an inlet and an outlet respectively for the cooling fluid passage.

9. A fixed type disc brake caliper as claimed in any one of claims 3 to 8, in which each cover comprises a plate (82) welded to the outer side face (48) of the respective limb.

10. A fixed type disc brake caliper as claimed in claim 9, in which the plate (82) is electron beam welded to the outer side face (48) of the limb.

11. A fixed type disc brake caliper as claimed in any one of claims 3 to 10, in which the outer side face (48) of each limb is recessed (84) to accommodate a respective cover plate.

12. A fixed type disc brake caliper as claimed in claim 11, in which the channel (46) in each limb extends from a base of the recess, transversely of the caliper into the limb.

13. A fixed type disc brake caliper as claimed in any one of claims 1 to 12, in which the body (10) is formed from two parts, each part being machined from a single piece of material.

14. A fixed type disc brake caliper as claimed in any one of claims 1 to 12, in which the body (10) is a single unitary part.

15. A method of manufacturing a fixed type disc brake caliper (8) having a machined from solid body (10), the body comprising a pair of limbs (12, 14) interconnected by spaced bridging members (16, 18), wherein each limb houses one or more hydraulic cylinders (26, 28, 30), the method comprising forming a cooling fluid (45) passage for circulating cooling water through both limbs, **characterised in that**, in each limb, the passage (45) is formed so as to extend at least partially through both an upper peripheral wall region (42) of the limb between the one or more cylinders and an upper face (38) of the limb and a lower peripheral wall region (44) of the limb between the one or more cylinders and a lower face (38) of the limb, such that the passage at least partially surrounds opposing side wall regions (54) of the, or each, of the cylinders in the limb.

16. A method as claimed in claim 15, in which the cooling fluid passage (45) is formed so as to substantially encircle an area of each limb (12, 14) which contains the one or more cylinders (26, 28, 30).

17. A method as claimed in claim 15 or claim 16, in which the step of forming the cooling fluid passage (45) comprises forming a channel (46) in an outer side face (48) of each of the limbs and mounting a cover (82) to the outer side face of each limb to close off an open side of the channel.

18. A method as claimed in claim 17, in which the method comprises welding a cover plate (82) to the outer side face (48) of each limb.

19. A method as claimed in claim 18, in which the method comprises electron beam welding a cover plate (82) to the outer side face (48) of each limb.

20. A method as claimed in any one of claims 17 to 19, in which the method further comprises forming a recess (84) in the outer side face (48) of each limb to receive a respective cover plate (82).

21. A method as claimed in claim 20, in which the step of forming the channels (46) comprises forming each channel in a base of the recess in the respective limb (12, 14) so that the channel extends transversely of the caliper into the limb.

22. A method as claimed in any one of claims 17 to 21, in which the depth of the channel (46) in each limb is varied along its length to form regions of greater depth (50) separated by regions of lesser depth (52).

23. A method as claimed in claim 22, in which at least some of the regions of greater depth (50) are extended into a peripheral wall region (42, 44) of the respective limb (12, 14) so as to overlap a side wall region (54) of at least one cylinder.

24. A method as claimed in claim 23, in which at least one region of greater depth (50) of the channel in each limb is formed so as to overlap a side wall (54) region of two adjacent cylinders.

25. A method as claimed in any one of claims 17 to 24, in which the step of forming the channels (46) is carried out using an end mill.

26. A method as claimed in any one of claims 17 to 25, in which the channel (46) in each limb (12, 14) is formed so as to have a first end (60) and a second end (70) and the method further comprises forming a bore (72) in one of the bridging members (16) to fluidly interconnect the first end of the channel in one of the limbs with the first end of the channel in the other of the limbs.

27. A method as claimed in claim 26, in which the method further comprises forming a first port (76) and a second port (80) and forming a first further bore (74) to connect the second end (70) of the channel in one of the limbs (12) with the first port (76) and forming a second further bore (78) to connect the second end (70) of the channel in the other of the limbs (14) to the second port (80).

28. A method as claimed in any one of claims 15 to 27, in which the method comprises machining the body (10) in two-parts from two solid pieces of material.

29. A method as claimed in any one of claims 15 to 27, in which the method comprises machining the body (10) in a single integral part from a single solid piece of material.
